# FASCICULE DE BREVET EUROPEEN

(11) **EP 2 441 648 B1**
(45) Date de publication et mention de la délivrance du brevet: **04.09.2013**
(21) Numéro de dépôt: 11180214.6
(22) Date de dépôt: 06.09.2011
(51) Int. Cl.: B62D 3/12, B62D 5/22

(54) **Carter de direction de véhicule automobile avec élément de renfort**
Kraftfahrzeug-Lenkgetriebegehäuse mit Verstärkungselement
Automobile steering gearbox with reinforcement element

(30) Priorité: 12.10.2010 FR 1058267
(43) Date de publication de la demande: 18.04.2012
(73) Titulaire: Jtekt Europe, 69540 Irigny (FR)
(72) Inventeur: Rey, Laurent, 69100 Villeurbanne (FR); Brochot, Patrice, 69600 Oullins (FR)
(74) Mandataire: Chevalier, Renaud Philippe

(56) Documents cités:
- EP-A2- 1 022 209
- JP-A- 10 236 327
- US-A- 4 809 806

## Description

La présente invention concerne, de façon générale, les systèmes de direction de véhicules automobiles. Elle se rapporte plus particulièrement à un carter de direction, aussi appelé carter de crémaillère, qui est une pièce creuse de support et de protection, dans laquelle sont montés et guidés notamment une crémaillère et un pignon qui engrène avec la crémaillère, et sur laquelle peuvent aussi être montées des pièces annexes de guidage et d'étanchéité qui coopèrent avec la crémaillère et avec le pignon. Compte tenu de la forme très allongée de la crémaillère, le carter de direction possède lui-même une forme allongée et creuse, donc une forme globalement tubulaire.

Dans le cas d'une direction à assistance électrique, le carter de direction est, le plus souvent, assemblé à un autre carter qui renferme un réducteur à engrenages, par exemple un réducteur à vis sans fin et roue tangente, auquel est accouplé l'arbre de sortie du moteur électrique d'assistance. Dans le cas d'une direction à assistance hydraulique, le carter de direction possède des formes internes cylindriques qui constituent, avec la crémaillère, l'équivalent d'un vérin hydraulique destiné à assister le conducteur en amplifiant l'effort exercé par ce dernier sur le volant.

Dans tous les cas, le carter de direction réalise aussi une liaison entre le système de direction, considéré dans sa globalité, et la caisse du véhicule automobile concerné, plus particulièrement son berceau. Le carter de direction doit donc posséder une bonne rigidité, lui permettant d'absorber et de transmettre des efforts mécaniques.

Ainsi, tout carter de direction doit être fabriqué de manière à, d'une part, posséder une bonne résistance mécanique et, d'autre part, posséder une géométrie très précise pour le positionnement et le guidage de divers organes. Plusieurs modes d'obtention d'un carter de direction sont connus.

Le plus habituellement, un carter de direction est réalisé par moulage, en alliage d'aluminium, la pièce obtenue par moulage étant ensuite usinée de manière très précise dans ses zones fonctionnelles, destinées à coopérer avec d'autres éléments du système de direction.

Ce mode de réalisation présente l'inconvénient d'être relativement lourd, et sensible à la corrosion. En outre, les zones fonctionnelles doivent être ré-usinées puisque le carter « brut », en alliage d'aluminium, ne présente pas une précision dimensionnelle suffisante, ce qui complique et renchérit le procédé de fabrication d'un tel carter.

Par ailleurs, on connaît des pièces en matières plastiques renforcées avec des fibres suffisamment résistantes pour remplacer les pièces en alliages d'aluminium, utilisées dans le domaine automobile notamment pour des applications prenant place sous le capot moteur : bac à huile, crépine, boîtier de papillon des gaz, etc. De telles matières plastiques présentent, en elles-mêmes, l'inconvénient d'être moins rigides que l'aluminium et ses alliages, de sorte qu'il est nécessaire de renforcer considérablement les pièces ainsi fabriquées, pour obtenir une rigidité équivalente à celle de l'aluminium.

Pour des carters de direction, l'espace disponible restreint et les exigences de rigidité propres aux fonctions de ces carters limitent encore, à l'heure actuelle, la réalisation dans ces matières plastiques renforcées.

Il est également connu de réaliser des pièces dites « hybrides », qui associent une matière plastique renforcée et un renfort en forme de coque. Le renfort est lui-même réalisé soit en métal et obtenu dans ce cas par emboutissage et découpe, soit en matériaux composites tissés et obtenu dans ce cas par formage à chaud ou thermoformage puis découpe. Ce renfort est surmoulé par la matière plastique renforcée, de nature appropriée, pour obtenir une pièce hybride dont l'avantage est de bénéficier, simultanément, des libertés de formes offertes par le moulage de la matière plastique renforcée et de la rigidité procurée par le renfort métallique ou composite. Toutefois, ce mode d'obtention est difficilement applicable à la fabrication des carters de direction, en raison de la forme de telles pièces : l'outillage utilisé pour le surmoulage de la matière plastique renforcée doit, d'une part, assurer le maintien du renfort et, d'autre part, assurer le guidage de deux noyaux mobiles nécessaires à l'obtention de la forme intérieure creuse du carter de direction. Le document EP 1 022 209 divulgue le préambule de la revendication 1.

La présente invention vise à remédier aux divers inconvénients précédemment exposés, et elle a donc pour but de fournir un carter de direction conçu comme une pièce hybride, tout en proposant un procédé de fabrication applicable à un tel carter.

A cet effet, la présente invention a premièrement pour objet un carter de direction de véhicule automobile avec élément de renfort, le carter de direction étant prévu pour loger et guider une crémaillère, et de préférence aussi un pignon venant en prise avec la crémaillère ainsi qu'un poussoir pressant le pignon contre la crémallière, ce carter de direction possédant une forme allongée et creuse, et ce carter de direction étant caractérisé par le fait qu'il comprend un élément de renfort, ayant globalement la forme d'un profilé en U, qui est enrobé dans une masse de matière plastique, l'élément de renfort possédant des zones spécifiques prévues pour renforcer des zones fonctionnelles du carter de direction, telles que le logement du pignon et/ou le logement du poussoir et/ou les zones de fixation du carter de direction.

Ainsi, le problème à la base de l'invention est résolu en prévoyant un élément de renfort longitudinal, dont la forme globale est celle d'un profilé en U, et qui comporte localement des formes spécifiques, propres à renforcer efficacement diverses zones fonctionnelles du carter de direction : zone du pignon, zone du poussoir, zones de fixation, etc. L'élément de renfort est recouvert d'une masse de matière plastique, qui adhère à cet élément de manière à obtenir un carter de direction monobloc.

L'élément de renfort, ayant globalement la forme d'un profilé en U, peut être réalisé dans une matière métallique, telle que de l'acier.

Cet élément de renfort peut aussi être réalisé dans un matériau composite. En tant que matériau composite, on utilise ici avantageusement une matrice en matière thermoplastique ou thermodurcissable, renforcée par de la fibre de verre ou de la fibre de carbone ou de la fibre d'aramide, ou un mélange de ces fibres, les fibres pouvant être des fibres continues unidirectionnelles ou multidirectionnelles et tissées entre elles ou non, ou encore des fibres discontinues et dispersées de manière aléatoire. La matière thermoplastique ou thermodurcissable, constituant la matrice de l'élément de renfort, doit être compatible avec la matière plastique qui enrobe l'élément de renfort, de manière à obtenir une bonne adhésion entre l'élément de renfort et la masse d'enrobage.

Pour optimiser la cohésion entre l'élément de renfort et la masse d'enrobage, la surface extérieure de l'élément de renfort est avantageusement une surface texturée.

En plus des zones spécifiques précédemment mentionnées, l'élément de renfort peut présenter, réparties sur sa périphérie, des ailettes de maintien qui interviennent, lors de la fabrication du carter de direction, pour positionner et maintenir l'élément de renfort dans un moule de surmoulage, utilisé pour l'injection de la matière plastique constituant la masse d'enrobage.

L a matière plastique, constituant la masse d'enrobage, est avantageusement un polyamide, par exemple un polyamide 66, un polyamide aromatique ou un polyphénylènesulfone (PPS), de préférence renforcé de fibre de verre et/ou de carbone de longueur adaptée au procédé d'injection de telles matières plastiques, la matrice de l'élément de renfort (dans le cas d'une réalisation en matériau composite) pouvant être constituée de la même matière, pour une compatibilité et cohésion optimales. Ces matières thermoplastiques ont aussi pour avantage de ne pas être sensibles à la corrosion, contrairement aux alliages d'aluminium dans lesquels sont habituellement réalisés les carters de direction.

L'invention a aussi pour objet un procédé de fabrication d'un carter de direction de véhicule automobile avec élément de renfort, tel que précédemment défini. Ce procédé de fabrication consiste :
- à prévoir un élément de renfort rigide, ayant globalement la forme d'un profilé en U, réalisé dans une matière métallique ou dans un matériau composite ;
- à introduire l'élément de renfort dans un moule de surmoulage, et à surmouler cet élément en injectant une matière plastique, de préférence renforcée, destinée à former une masse d'enrobage adhérant à l'élément de renfort ;
   des moyens étant prévus sur l'élément de renfort et/ou à l'intérieur du moule de surmoulage, pour le positionnement et le maintien de l'élément de renfort dans ledit moule, notamment au cours du surmoulage.

Le procédé de l'invention implique la formation préalable de l'élément de renfort, avec ses formes spécifiques dans certaines zones. Dans le cas d'un élément de renfort en matériau composite, cet élément est avantageusement obtenu par formage à chaud ou thermoformage, suivi d'une opération de découpe qui permet notamment de créer les passages nécessaires aux différents noyaux du moule de surmoulage.

Le moule de surmoulage comprend des moyens de maintien de l'élément de renfort, ainsi que des noyaux mobiles destinés à l'obtention de la forme intérieure creuse du carter de direction, en particulier des noyaux qui correspondent à la réservation de l'espace libre devant recevoir la crémaillère, ces derniers noyaux étant engagés dans la zone intérieure de l'élément de renfort ayant globalement la forme d'un profilé en U.

Le moule de surmoulage peut comporter des noyaux mobiles de maintien qui réalisent le positionnement initial de l'élément de renfort, en le soutenant par sa base, et le maintien en place de cet élément au cours du surmoulage, de manière à limiter la déformation de l'élément de renfort lors de l'injection de la matière plastique d'enrobage.

D'autres noyaux mobiles sont avantageusement prévus, qui contribuent au maintien en position des noyaux de crémaillère, avant injection de la matière plastique d'enrobage, ces autres noyaux mobiles étant rétractés en fin d'injection de sorte que ladite matière plastique puisse enrober entièrement l'élément de renfort, sans laisser de « trou » susceptible de laisser entrer de l'eau dans le carter de direction, lors de son utilisation future.

En variante, le moule de surmoulage peut comporter, dans son empreinte, des zones d'appui qui soutiennent au moins localement l'élément de renfort par sa base.

Le moule de surmoulage peut encore comporter, dans le plan de joint de sa partie fixe et de sa partie mobile, des évidements prévus pour recevoir les ailettes de maintien formées à la périphérie de l'élément de renfort, ces ailettes se trouvant ainsi « pincées » lors de la fermeture du moule.

On obtient ainsi une immobilisation de l'élément de renfort dans le moule de surmoulage, tant dans le sen de la hauteur que dans le sens transversal, ce qui garantit une épaisseur constante et précise de la matière plastique d'enrobage, injectée dans le moule.

L'invention sera mieux comprise à l'aide de la description qui suit, en référence au dessin schématique annexé représentant, à titre d'exemple, une forme de réalisation de ce carter de direction, et illustrant son procédé de fabrication.
Figure 1 est une vue extérieure d'un carter de direction réalisable conformément à la présente invention ;
Figure 2 est une autre vue extérieure de ce carter de direction ;
Figure 3 est une vue en coupe longitudinale de l'élément de renfort seul ;
Figure 4 est une autre vue en coupe longitudinale de l'élément de renfort, suivant IV-IV de figure 3 ;
Figure 5 est une vue en coupe longitudinale du carter, tel qu'obtenu auprès surmoulage de l'élément de renfort ;
Figure 6 est une autre vue en coupe longitudinale du carter, suivant VI-VI de figure 5 ;
Figure 7 est une vue en coupe transversale du carter, suivant VII-VII de figure 5 ;
Figure 8 est une autre vue en coupe transversale du carter, suivant VIII-VIII de figure 5 ;
Figures 9, 10 et 11 représentent un détail de la figure 8, respectivement avant surmoulage, en cours de surmoulage et après surmoulage ;
Figure 12 est encore une autre vue en coupe transversale du carter, suivant XII-XII du figure 5, avec indication de la crémaillère, du pignon et du poussoir montés dans ce carter ;
Figures 13, 14 et 15 sont des vues de détail en coupe, correspondant aux figures 9, 10 et 11 c'est-à-dire respectivement avant surmoulage, en cours de surmoulage et après surmoulage, dans une variante du procédé.

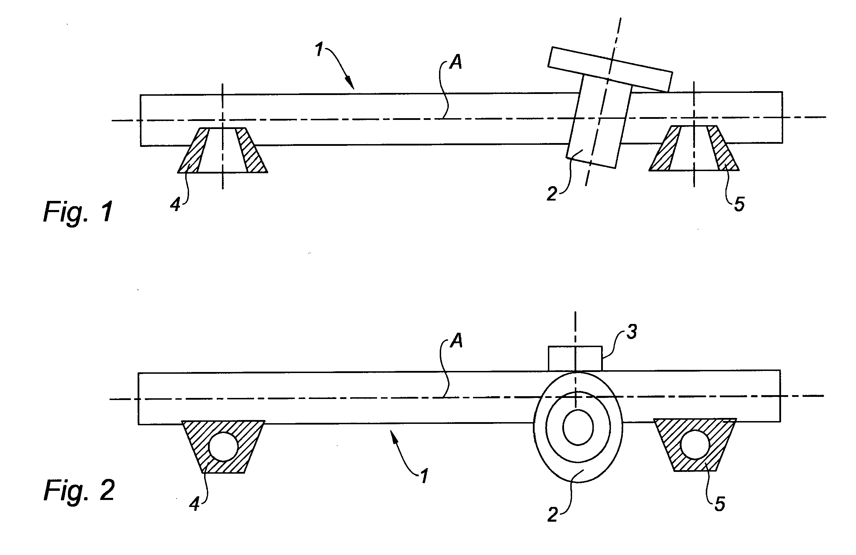

Comme le montrent les figures 1 et 2, un carter de direction 1 présente une forme générale allongée, son axe longitudinal étant indiqué en A. Le carter de direction 1 possède une conformation creuse, lui permettant de recevoir une crémaillère, ce carter présentant aussi une excroissance 2 recevant le pignon de direction, et une autre excroissance 3 formant un logement pour le poussoir, lequel presse le pignon contre la crémaillère. Le carter de direction 1 comporte encore, extérieurement, des éléments de fixation 4 et 5 pour sa liaison avec la caisse d'un véhicule automobile.

Ce carter de direction 1 possède une constitution hybride, avec un corps à base de matière plastique renforcé par un élément de renfort 6.

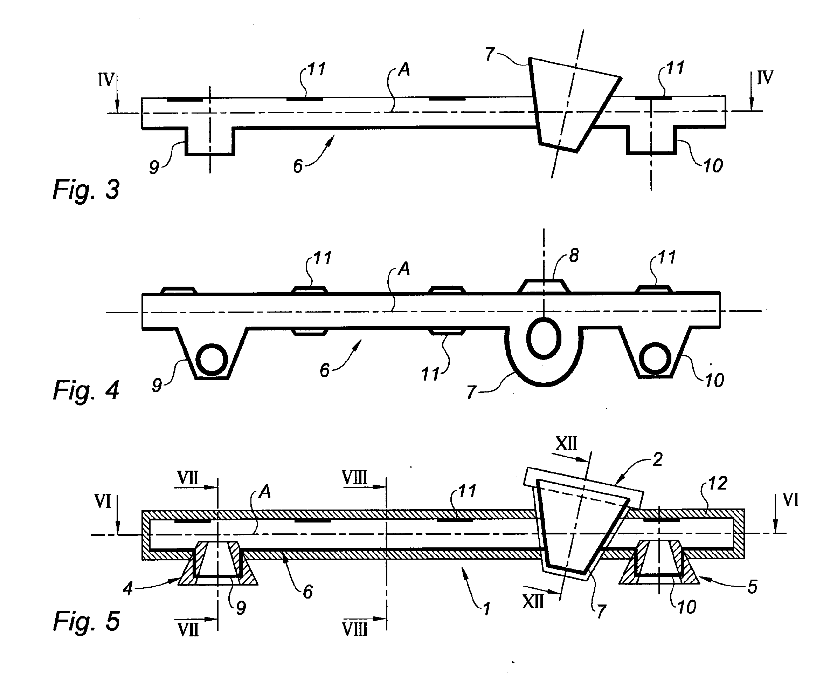

Les figures 3 et 4 montrent l'élément de renfort 6 seul, cet élément étant constitué par un profilé en U, soit en métal soit en matériau composite, dont la longueur correspond sensiblement à celle du carter de direction 1. La largeur de la section de l'élément de renfort 6, et la hauteur de cette section, sont déterminées de telle sorte que ledit élément de renfort 6 puisse entourer la crémaillère qui prendra place à l'intérieur du carter de direction 1.

Décrit jusqu'ici comme un profilé en U, l'élément de renfort 6 possède localement des singularités aptes à renforcer des zones fonctionnelles du carter de direction 1. On distingue ainsi :
- une zone spécifique 7 qui correspond à l'excroissance 2 recevant le pignon de direction ;
- une zone spécifique 8 qui correspond à l'excroissance 3 logeant le poussoir ;
- deux zones spécifiques 9 et 10 qui correspondent respectivement aux éléments de fixation 4 et 5.

Dans le mode de réalisation illustré aux figures 3 et 4, l'élément de renfort comporte encore, latéralement, des ailettes de maintien 11 réparties sur sa longueur, qui sont destinées au maintien de l'élément de renfort 6 dans un moule de surmoulage (comme décrit en détail plus bas).

La surface extérieure de l'élément de renfort 6 est texturée, pour favoriser l'accrochage d'une matière de surmoulage 12 qui viendra enrober cet élément de renfort, comme le montrent les figurent 5 et 6. La matière de surmoulage 12 est une matière plastique renforcée par l'incorporation de fibres.

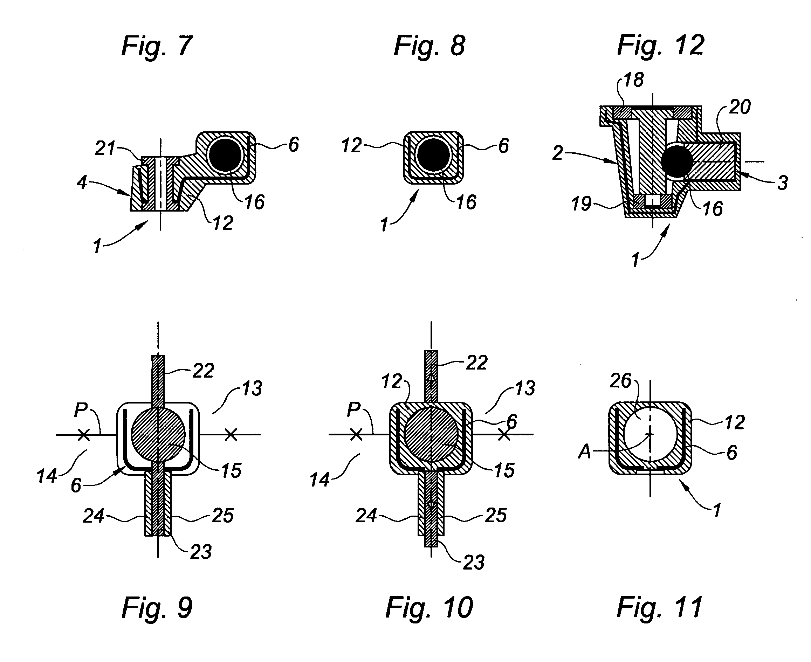

Les figures 7 et suivantes illustrent plus en détail le procédé de fabrication du carter de direction, et en particulier l'opération de surmoulage de l'élément de renfort 6.

Une fois formé, l'élément de renfort 6 est introduit dans un moule de surmoulage qui comprend deux parties de moule 13 et 14, l'une fixe et l'autre mobile, réunies suivant un plan de joint P dans la position de fermeture du moule. Ce moule comporte aussi divers noyaux mobiles, en particulier deux noyaux mobiles 15 engageables dans la zone intérieure de l'élément de renfort 6, pour la réservation de l'espace libre appelé à recevoir la crémaillère 16. De manière similaire, sont prévus des noyaux qui correspondent au logement recevant le pignon de direction 17 et ses éléments de guidage 18 et 19, ainsi qu'au logement recevant le poussoir 20 (voir figure 12).

Sont aussi introduits, dans le moule de surmoulage, des inserts 21 notamment sous la forme de douilles métalliques, destinés à faire partie des futurs éléments de fixation 4 et 5 du carter de direction 1 - voir figure 7.

Dans la position de fermeture du moule, la matière plastique 12 est injectée de telle sorte que l'élément de renfort 6 se trouve surmoulé par cette matière. A ce stade, les inserts 21 se trouvent eux aussi surmoulés par la matière plastique 12 injectée. Les noyaux mobiles 15 créent l'espace libre intérieur appelé à recevoir la crémaillère 16, celle-ci étant représentée à titre explicatif par exemple sur la figure 8 mais n'étant en réalité mise en place qu'après achèvement du carter de direction 1.

En se référant aux vues de détail des figures 9, 10 et 11, des noyaux mobiles supplémentaires sont prévus pour le positionnement et le maintien, avant et pendant le surmoulage, des noyaux 15 de crémaillère et de l'élément de renfort 6 lui-même.

Ainsi, des noyaux mobiles 22 et 23, rétractables respectivement vers le haut et vers le bas, maintiennent les noyaux 15 de crémaillère à la bonne hauteur, avant l'arrivée du flux de matière plastique 12 - voir figure 9. Au cours du remplissage du moule par cette matière, les noyaux mobiles 22 et 23 sont rétractés, comme illustré par la figure 10, de sorte que la matière plastique 12 entourera complètement les noyaux 15 de crémaillère, sans laisser subsister de « trou ».

De part et d'autre du noyau mobile 23 rétractable vers le bas, sont prévus d'autres noyaux mobiles 24 et 25, qui soutiennent l'élément de renfort 6 par sa base, avant et pendant l'opération de surmoulage.

Après démoulage, et comme le montre notamment la figure 11, on obtient le carter de direction 1 de section courante sensiblement rectangulaire, avec un espace libre intérieur 26 de section circulaire, « encadré » par les deux ailes de l'élément de renfort 6 en U, l'espace libre 26 étant appelé à recevoir la crémaillère 16.

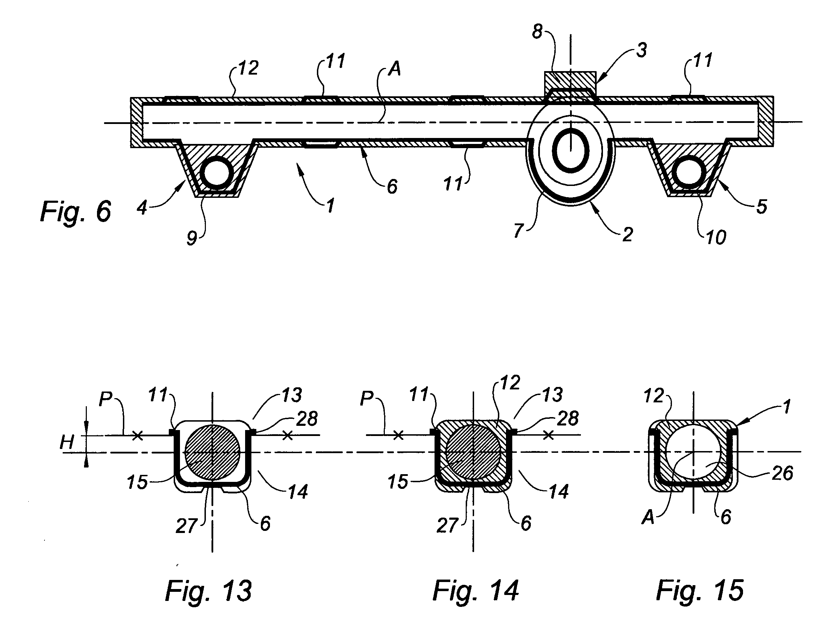

Les figures 13, 14 et 15 illustrent des solutions alternatives, pour le positionnement et le maintien de l'élément de renfort 6, avant et pendant le surmoulage.

L'empreinte du moule de surmoulage, creusée dans la partie 14 de ce moule, comporte ici des zones d'appui 27 surélevées, qui soutiennent localement l'élément de renfort 6 par sa base, en le positionnant verticalement.

Par ailleurs, dans le plan de joint P des deux parties de moule 13 et 14, sont creusés des évidements 28 qui reçoivent les ailettes de maintien 11 de l'élément de renfort 6. Ainsi, lors de la fermeture du moule, l'élément de renfort 6 se trouve « pincé » et aussi positionné latéralement.

On notera que, dans ce dernier cas, le sommet des ailes du profilé de renfort 6 en U, donc le plan de joint P, se situent à une certaine hauteur H au-dessus du centre des noyaux mobiles 15 de crémaillère, la hauteur H étant choisie pour obtenir une rigidité appropriée du carter de direction 1.

L'élément de renfort 6 est réalisable en matériau composite, tel qu'un tissu de fibre de verre enduit de polyamide. La matière plastique d'enrobage 12 est avantageusement un polyamide renforcé par de la fibre de verre « courte », c'est-à-dire de longueur adaptée au procédé d'injection de cette matière plastique, typiquement comprise entre 0,15 mm et 5 mm. La matière plastique d'enrobage 12 et la matrice de l'élément de renfort 6 sont choisies pour être compatibles, c'est-à-dire pour procurer, après surmoulage, une adhésion significative entre l'élément de renfort 6 et la matière plastique d'enrobage 12. En particulier, il s'agit de polyamides de même nature, par exemple du polyamide 66.

On ne s'éloignerait pas du cadre de l'invention, telle que définie dans les revendications annexées, par une modification du détail des formes et des matériaux utilisés, ou en ayant recours à tous équivalents, notamment en ce qui concerne les moyens de maintien de l'élément de renfort à l'intérieur du moule de surmoulage, avant et pendant l'injection de la matière plastique d'enrobage.

## Revendications

1. Carter de direction de véhicule automobile à structure renforcée, prévu pour loger et guider une crémaillère, et de préférence aussi un pignon venant en prise avec la crémaillère ainsi qu'un poussoir pressant le pignon contre la crémaillère, ce carter de direction possédant une forme allongée et creuse, **caractérisé en ce qu'**il comporte un élément de renfort (6), ayant globalement la forme d'un profilé en U, qui est enrobé dans une masse de matière plastique (12), l'élément de renfort (6) possédant des zones spécifiques (7 à 10) prévues pour renforcer des zones fonctionnelles du carter de direction, telles que le logement (2) du pignon et/ou le logement (3) du poussoir et/ou les zones de fixation (4,5) du carter de direction (1).

2. Carter de direction selon la revendication 1, **caractérisé en ce que** l'élément de renfort (6) est réalisé dans une matière métallique, telle que l'acier.

3. Carter de direction selon la revendication 1, **caractérisé en ce que** l'élément de renfort (6) est réalisé dans un matériau composite.

4. Carter de direction selon la revendication 3, **caractérisé en ce que** le matériau composite de l'élément de renfort (6) consiste en une matrice en matière thermoplastique ou thermodurcissable, renforcée par de la fibre de verre ou de la fibre de carbone ou de la fibre d'aramide, ou un mélange de ces fibres, les fibres pouvant être des fibres continues unidirectionnelles ou multidirectionnelles et tissées entre elles ou non, ou encore des fibres discontinues et dispersées de manière aléatoire.

5. Carter de direction selon l'une des revendications 1 à 4, **caractérisé en ce que** la surface extérieure de l'élément de renfort (6) est une surface texturée.

6. Carter de direction selon l'une des revendications 1 à 5, **caractérisé en ce que** l'élément de renfort (6) présente, réparties sur sa périphérie, des ailettes de maintien (11) qui interviennent, lors de la fabrication du carter de direction (1), pour positionner et maintenir l'élément de renfort (6) dans un moule de surmoulage(13, 14), utilisé pour l'injection de la matière plastique (12) constituant la masse d'enrobage.

7. Carter de direction selon l'une des revendications 1 à 6, **caractérisé en ce que** la matière plastique (12), constituant la masse d'enrobage, est un polyamide, par exemple un polyamide 66, un polyamide aromatique ou un polyphénylènesulfone (PPS), de préférence renforcé de fibre de verre et/ou de carbone.

8. Procédé de fabrication d'un carter de direction de véhicule à structure renforcée, selon l'une des revendications 1 à 7, **caractérisé en ce qu'**il consiste :
- à prévoir un élément de renfort (6) rigide, ayant globalement la forme d'un profilé en U, réalisé dans une matière métallique ou dans un matériau composite ;
- à introduire l'élément de renfort (6) dans un moule de surmoulage (13, 14), et à surmouler cet élément avec une matière plastique (12), de préférence renforcée, destinée à former une masse d'enrobage adhérant à l'élément de renfort (6);
des moyens étant prévus sur l'élément de renfort (6) et/ou à l'intérieur du moule de surmoulage (13, 14), pour le positionnement et le maintien de l'élément de renfort (6) dans ledit moule, notamment au cours du surmoulage.

9. Procédé selon la revendication 8, **caractérisé en ce que** dans le cas d'un élément de renfort (6) en matériau composite, cet élément est obtenu par formage à chaud ou thermoformage, suivi d'une opération de découpe qui permet notamment de créer les passages nécessaires aux différents noyaux du moule de surmoulage (13, 14).

10. Procédé selon la revendication 8 ou 9, **caractérisé en ce que** le moule de surmoulage (13, 14) comprend des moyens de maintien (24, 25 ; 27) de l'élément de renfort (6), ainsi que des noyaux mobiles destinés à l'obtention de la forme intérieure creuse du carter de direction (1), en particulier des noyaux (15) qui correspondent à la réservation de l'espace libre devant recevoir la crémaillère, ces derniers noyaux (15) étant engagés dans la zone intérieure de l'élément de renfort (6) ayant globalement la forme d'un profilé en U.

11. Procédé selon la revendication 10, **caractérisé en ce que** le moule de surmoulage comporte des noyaux mobiles de maintien (24, 25) qui réalisent le positionnement initial de l'élément de renfort (6), en le soutenant par sa base, et le maintien en place de cet élément au cours du surmoulage, de manière à limiter la déformation de l'élément de renfort (6) lors de l'injection de la matière plastique d'enrobage.

12. Procédé selon la revendication 11, **caractérisé en ce que** d'autres noyaux mobiles (22, 23) sont prévus pour contribuer au maintien en position des noyaux de crémaillère (15), avant injection de la matière plastique d'enrobage (12), ces autres noyaux mobiles (22, 23) étant rétractés en fin d'injection de sorte que ladite matière plastique (12) puisse enrober entièrement l'élément de renfort (6).

13. Procédé selon la revendication 8 ou 9, **caractérisé en ce que** le moule de surmoulage (13, 14) comporte, dans son empreinte, des zones d'appui (27) qui soutiennent au moins localement l'élément de renfort (6) par sa base.

14. Procédé selon l'une des revendications 8 à 13, **caractérisé en ce que** le moule de surmoulage comporte, dans le plan de joint (P) de sa partie fixe (13) et de sa partie mobile (14), des évidements (28) prévus pour recevoir les ailettes de maintien (11) formées à la périphérie de l'élément de renfort (6), ces ailettes se trouvant ainsi « pincées » lors de la fermeture du moule (13, 14).

## Patentansprüche

1. Kraftfahrzeug-Lenkgetriebegehäuse mit verstärkter Struktur, das zur Aufnahme und Führung einer Zahnstange vorgesehen ist und vorzugsweise auch eines Zahnrads, das mit der Zahnstange in Eingriff kommt sowie eines Drückers, der das Zahnrad gegen die Zahnstange drückt, wobei dieses Lenkgetriebegehäuse eine längliche und hohle Form aufweist, **dadurch gekennzeichnet, dass** es ein Verstärkungselement (6) mit einer allgemeinen Form eines U-Profils aufweist, das in einer Kunststoffmasse (12) überzogen ist, wobei das Verstärkungselement (6) spezielle Zonen (7 bis 10) besitzt, die vorgesehen sind, um die Funktionszonen des Lenkgetriebegehäuses wie die Aufnahme (2) des Zahnrads und/oder die Aufnahme (3) des Drückers und/oder die Befestigungszonen (4, 5) des Lenkgetriebegehäuses (1) zu verstärken.

2. Lenkgetriebegehäuse nach Anspruch 1, **dadurch gekennzeichnet, dass** das Verstärkungselement (6) aus einem metallischen Material wie Stahl hergestellt ist.

3. Lenkgetriebegehäuse nach Anspruch 1, **dadurch gekennzeichnet, dass** das Verstärkungselement (6) aus einem Verbundmaterial hergestellt ist.

4. Lenkgetriebegehäuse nach Anspruch 3, **dadurch gekennzeichnet, dass** das Verbundmaterial des Verstärkungselements (6) aus einer Matrix aus thermoplastischem oder duroplastischem Material besteht, die durch Glasfaser oder Karbonfaser oder Aramidfaser oder ein Gemisch dieser Fasern verstärkt ist, wobei die Fasern kontinuierliche eindirektionale oder multidirektionale Fasern und miteinander verwoben oder nicht oder auch diskontinuierliche und nach dem Zufallsprinzip verteilte Faser sein können.

5. Lenkgetriebegehäuse nach einem der Ansprüche 1 bis 4, **dadurch gekennzeichnet, dass** die äußere Oberfläche des Verstärkungselements (6) eine texturierte Oberfläche ist.

6. Lenkgetriebegehäuse nach einem der Ansprüche 1 bis 5, **dadurch gekennzeichnet, dass** das Verstärkungselement (6) verteilt auf seinem Umfang Halteflügel (11) aufweist, die bei der Herstellung des Lenkgetriebegehäuses (1) zum Einsatz kommen, um das Verstärkungselement (6) in einer Overmoulding-Form (13, 14) zu positionieren und zu halten, die zum Einspritzen des Kunststoffmaterials (12), das die Überzugmasse bildet, verwendet wird.

7. Lenkgetriebegehäuse nach einem der Ansprüche 1 bis 6, **dadurch gekennzeichnet, dass** das Kunststoffmaterial (12), das die Überzugmasse bildet, ein Polyamid, beispielsweise ein Polyamid 66, ein aromatisches Polyamid oder ein Polyphenylensulfon (PPS) ist, vorzugsweise durch Glas- und/oder Karbonfasern verstärkt.

8. Verfahren zur Herstellung eines Fahrzeug-Lenkgetriebegehäuses mit verstärkter Struktur nach einem der Ansprüche 1 bis 7, **dadurch gekennzeichnet, dass** es darin besteht:
- Bereitstellen eines starren Verstärkungselements (6), das allgemein die Form eines U-Profils hat, das aus einem metallischen Material oder aus einem Verbundmaterial hergestellt ist,
- Einsetzen des Verstärkungselements (6) in eine Overmoulding-Form (13, 14) und Überformen dieses Elements mit einem vorzugsweise verstärkten Kunststoff (12), der zur Bildung einer Überzugmasse bestimmt ist, die am Verstärkungselement (6) anhaftet,
wobei auf dem Verstärkungselement (6) und/oder in der Overmoulding-Form (13, 14) Mittel für die Positionierung und das Halten des Verstärkungselements (6) in der Form vorgesehen sind, vor allem während des Überformens.

9. Verfahren nach Anspruch 8, **dadurch gekennzeichnet, dass** im Fall eines Verstärkungselements (6) aus Verbundmaterial dieses Element durch Warmformen oder Thermoformen hergestellt wird, gefolgt von einer Schneideoperation, die es erlaubt, insbesondere die für die verschiedenen Kerne der Overmoulding-Form (13, 14) notwendigen Durchgänge zu schaffen.

10. Verfahren nach Anspruch 8 oder 9, **dadurch gekennzeichnet, dass** die Overmoulding-Form (13, 14) Haltemittel (24, 25; 27) des Verstärkungselements (6) umfasst sowie bewegliche Kerne, die zur Ausbildung der hohlen inneren Form des Lenkgetriebegehäuses (1) bestimmt sind, insbesondere Kerne (15), die der Reservierung des Freiraums entsprechen, der die Zahnstange aufnehmen muss, wobei diese letzten Kerne (15) in die innere Zone des Verstärkungselements (6) eingreifen, das allgemein die Form eines U-Profils hat.

11. Verfahren nach Anspruch 10, **dadurch gekennzeichnet, dass** die Overmoulding-Form bewegliche Haltemittel (24, 25) aufweist, die die Ausgangspositionierung des Verstärkungselements (6), indem sie es anhand seiner Basis stützen, und den Halt am Ort dieses Elements während des Overmouldings durchführen, um die Verformung des Verstärkungselements (6) beim Einspritzen des Überzug-Kunststoffmaterials zu begrenzen.

12. Verfahren nach Anspruch 11, **dadurch gekennzeichnet, dass** sonstige bewegliche Kerne (22, 23) vorgesehen sind, um vor dem Einspritzen des Überzug-Kunststoffmaterials (12) zum Halten der Position der Zahnstangenkerne (15) beizutragen, wobei diese sonstigen beweglichen Kerne (22, 23) am Ende des Einspritzens derart zurückgezogen werden, dass das Kunststoffmaterial (12) das Verstärkungselement (6) vollständig überziehen kann.

13. Verfahren nach Anspruch 8 oder 9, **dadurch gekennzeichnet, dass** die Overmoulding-Form (13, 14) in ihrem Abdruck Stützzonen (27) aufweist, die das Verstärkungselement (6) anhand seiner Basis mindestens lokal stützen.

14. Verfahren nach einem der Ansprüche 8 bis 1 3, **dadurch gekennzeichnet, dass** die Overmoulding-Form in der Verbindungsebene (P) ihres starren Teils (13) und ihres beweglichen Teils (14) Aussparungen (28) aufweist, die zur Aufnahme der Halteflügel (11) vorgesehen sind, die auf dem Umfang des Verstärkungselements (6) ausgebildet sind, wobei diese Flügel beim Schließen der Form (13, 14) "festgeklammert" werden.

## Claims

1. An automobile steering gearbox with a reinforced structure, provided to house and guide a rack, and preferably also a pinion engaging with the rack as well as a push-piece pressing the pinion against the rack, said steering gearbox having an elongated and hollow shape, **characterized in that** it includes a reinforcing element (6), generally having the shape of a U-shaped profile, which is coated with a mass of plastic material (12), the reinforcing element (6) having specific areas (7 to 10) provided to reinforce functional areas of steering gearbox, such as the housing (2) of the pinion and/or the housing (3) of the push-piece and/or the fastening areas (4, 5) of the steering gearbox (1).

2. The steering gearbox according to claim 1, **characterized in that** the reinforcing element (6) is made from a metal material, such as steel.

3. The steering gearbox according to claim 1, **characterized in that** the reinforcing element (6) is made from a composite material.

4. The steering gearbox according to claim 3, **characterized in that** the composite material of the reinforcing element (6) consists of a matrix made from a thermoplastic or thermosetting material, reinforced by glass fiber or carbon fiber or aramid fiber, or a mixture of said fibers, the fibers being able to be unidirectional or multidirectional continuous fibers that may or may not be woven together, or discontinuous and randomly dispersed fibers.

5. The steering gearbox according to one of claims 1 to 4, **characterized in that** the outer surface of the reinforcing element (6) is a textured surface.

6. The steering gearbox according to one of claims 1 and 5, **characterized in that** the reinforcing element (6) has, distributed over its periphery, maintaining fins (11) that participate, during manufacture of the steering gearbox (1), in positioning and maintaining the reinforcing element (6) in an overmolding mold (13, 14), used to inject plastic material (12) making up the coating mass.

7. The steering gearbox according to one of claims 1 to 6, **characterized in that** the plastic material (12), making up the coating mass, is a polyamide, for example a polyamide 66, an aromatic polyamide or a polyphenylene sulfone (PPS), preferably reinforced with glass and/or carbon fiber.

8. A method for manufacturing an automobile steering gearbox with a reinforced structure, according to one of claims 1 and 7, **characterized in that** it consists of:
- providing a rigid reinforcing element (6), generally in the shape of a U-shaped profile, made from metal or a composite material;
- inserting the reinforcing element (6) into an overmolding mold (13, 14), and overmolding that element with a plastic material (12), preferably reinforced, designed to form a coating mass adhering to the reinforcing element (6);
means being provided on the reinforcing element (6) and/or inside the overmolding mold (13, 14) for positioning and maintaining the reinforcing element (6) inside the mold, in particular during overmolding.

9. The method according to claim 8, **characterized in that** in the case of a reinforcing element (6) made from composite material, that element is obtained by hot forming or thermoforming, following a cutting operation that in particular makes it possible to create the passages necessary for the different corners of the overmolding mold (13, 14).

10. The method according to claim 8 or 9, **characterized in that** the overmolding mold (13, 14) comprises means (24, 25; 27) for maintaining the reinforcing element (6), as well as moving cores designed to obtain the hollow inner shape of the steering gearbox (1), in particular cores (15) that correspond to the notch of the free space that must receive the rack, the latter cores (15) being engaged in the inner area of the reinforcing element (6) globally in the shape of the U-shaped profile.

11. The method according to claim 10, **characterized in that** the overmolding mold includes movable maintaining cores (24, 25) that perform the initial positioning of the reinforcing element (6), while supporting it by its base, and maintenance in place of that element during the overmolding, so as to limit the deformation of the reinforcing element (6) during the injection of the plastic coating material.

12. The method according to claim 11, **characterized in that** other movable cores (22, 23) are provided to contribute to maintaining the position of the rack cores (15), before injecting the plastic coating material (12), said other moving cores (22, 23) being retracted at the end of injection such that said plastic material (12) can completely coat the reinforcing element (6).

13. The method according to claim 8 or 9, **characterized in that** the overmolding mold (13, 14) includes, in the cavity thereof, support areas (27) that at least locally support the reinforcing element (6) by its base.

14. The method according to one of claims 8 to 13, **characterized in that** the overmolding mold includes, in the joint plane (P) of the stationary portion (13) and moving portion (14), recesses (28) provided to receive the maintaining fins (11) formed on the periphery of the reinforcing element (6), said fins thus being "pinched" during closing of the mold (13, 14).
